# EUROPEAN PATENT APPLICATION

(11) **EP 1 488 911 A1**
(43) Date of publication of application: **22.12.2004**
(21) Application number: 04076654.5
(22) Date of filing: 04.06.2004
(51) Int. Cl.: B29C 49/00

(54) **Injection stretch blow molding method of a cylindrical narrow mouth container and a container**

(30) Priority: 16.06.2003 JP 2003171052
(71) Applicant: A.K. TECHNICAL LABORATORY, INC.,, Hanishina-gun, Nagano-ken (JP)
(72) Inventor: Takeuchi, Setsuyuki, A.K. Technical Lab., Inc., Hanishina-gun Nagano-ken (JP)
(74) Representative: Puiroux, Guy

(57) **Abstract**

The present invention relates to an injection stretch blow molding method of forming a cylindrical narrow mouth container (21) comprising the following steps; injection molding a preform (11) having a body portion (12) integrally molded with a neck portion (13) wherein the body portion (12) is formed thicker-wall and larger outside diameter than the neck portion (13) from a closing surface between a neck mold (33) and an injection cavity mold (41), and having a step-out portion (14), wherein an upper surface of the step-out portion (14) is formed by the closing surface of the neck mold (33) between the neck portion (13) and the body portion (12) and the step-out portion (14) has a smaller outside diameter than the body (22) of the container (21), and stretch blow molding the preform (11) to the container (22) in a blow cavity mold (31), wherein a body portion (22) of the container is formed thin-wall from around the upper surface of the step-out portion (14), and the step-out portion (14) and an expanded portion (14b) around the upper surface of the step-out portion (14) form a shoulder portion (24) of the container (22) flat, and also the outside diameter of the step-out portion (14) is smaller than the outside diameter of the open end of a cap (27).

## Description

### BACKGROUND OF THE INVENTION

### FIELD OF THE INVENTION

The present invention relates to an injection stretch blow molding method for manufacturing a cylindrical narrow mouth container having a flat shoulder and the container manufactured used for cosmetics, medical supplies or the other.

### THE PRIOR ART

According to a conventional stretch blow molded container, a base portion of a mouth portion of a preform is formed thicker than a body portion as an expanded portion (a step-out portion), and the expanded portion is formed as a support to be a stopper for a cap (reference patent 1: Japanese patent publication 2003-011212).

Also, another conventional art discloses a preform for a small flat container, which has a thick wall body portion having reduced thickness partially with leaving a step-out portion between a neck portion and a body portion (reference patent 2: Japanese patent publication 2003-011211).

In a cylindrical narrow mouth container having a flat shoulder portion from the base portion of the neck portion for cosmetics (for example, hair cream, lotion, mascara) or medical supplies, the radial stretch ratio becomes smaller as the container becomes smaller, and it is known that to mold such flat shoulder portion by stretching and expanding the resin is difficult.
If the step-out portion disclosed in the conventional art is applied to solve the problem mentioned above by making the outside diameter of the step-out portion equal to the outside diameter of the body portion of the container, a seam caused by weld appears under the flat shoulder portion, and the seam becomes a new problem for being treated as a defect in molding.

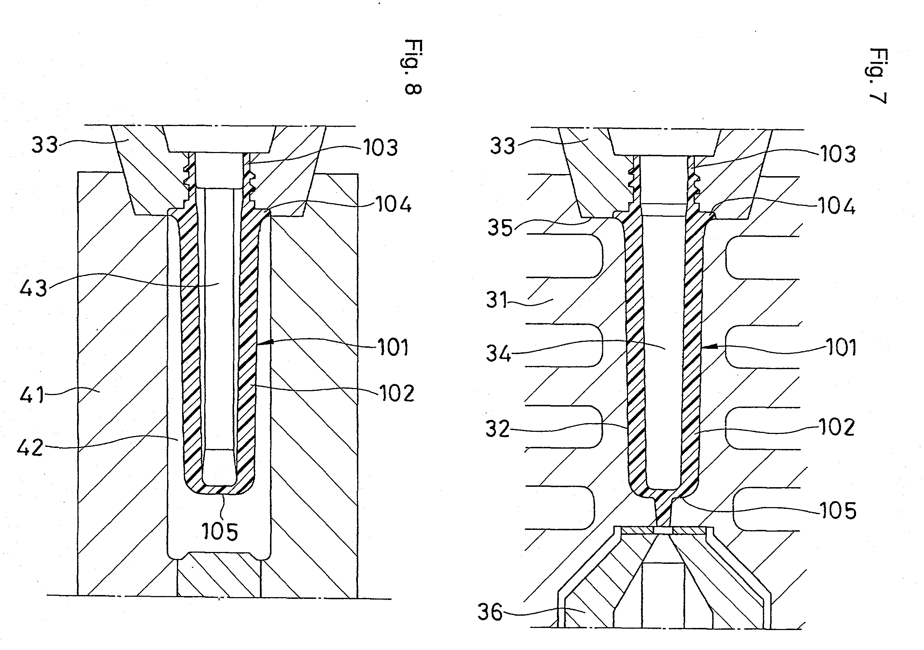

As illustrated on FIG. 7, a conventional preform is molded by closing an injection cavity mold 31 and a neck mold 33, inserting an injection core 34 into the cavity 32 through the neck mold 33, and injecting molten resin into the cavity 32 from a nozzle 36 located at the bottom. The cavity 32 forms the body portion 102 and the bottom portion 105 of the preform 101, and the neck mold 33 forms the neck portion 103 with the external thread.

As illustrated, a step-out portion 104 between the neck portion 103 and the body portion 102 is formed with the neck portion 103 having less thickness than the body portion 102 in the surface of the neck mold 33. Thus the lower portion of the step-out portion 104 close to the thick wall body portion 102 is softened by the heat of the body portion 102 after being released from the cavity 32, but the most part of the step-out portion 104 excluding the lower portion is cooled by the neck mold 33 and solidified with the neck portion 103 without being stretched.

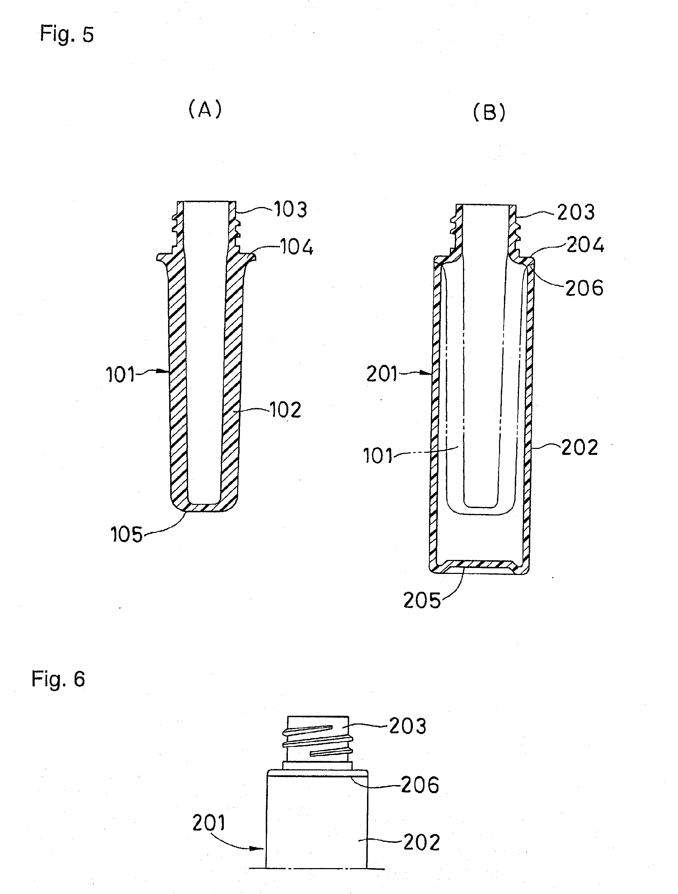

During the body portion 102 contains enough amount of heat to be stretch blow molded, the preform 101 having a step-out portion 104 illustrated on FIG. 5 (A) is released from the cavity 32 with maintaining the condition of the injection molding and the neck portion 103 being retained by the neck mold 33, transferred to the blow cavity mold 41 for forming a container illustrated on the FIG. 8 immediately, inserted into a cavity 42 with the neck portion 103 being still retained by the neck mold 33, and a blow core having a stretch rod 43 is inserted from the neck mold 33 into the neck portion 103. After that, the body portion 102 and the lower portion of the step-out portion 104 is stretched and expanded up to the edge of the step-out portion 104, and the preform 101 is stretch blow molded to a cylindrical narrow mouth container 201 as illustrated on FIG. 5 (B).

On the cylindrical narrow mouth container 201, the neck portion 103 of the preform 101 becomes the neck portion 203, the step-out portion 104 becomes the flat shoulder portion 204, and the body portion 202 from the shoulder portion 204 to the bottom portion 205 is formed thin wall, but the step-out portion 104 is already solidified by the time of being stretch blow molded, so that only the lower portion in the step-out portion 104 heated up by the body portion 102 is able to be stretched, and the resin of the lower portion follows the lower surface of the step-out portion 104 as it is expanded towards the cavity surface.

Therefore, the step-out portion 104 and the stretched part are not unified since no melting occurs, a weld is left, and it seems that the weld becomes a seam 206 and appears under the shoulder portion 204 like a ring as illustrated on FIG. 6. The seam 206 tends to be deep, and the shoulder portion 204 consist of the resin without being stretched which lacks of strength against impact, so the edge of the shoulder portion 204 sometimes breaks for the impact caused by being dropped or hit against another container.

### SUMMARY OF THE INVENTION

The object of this invention is to provide a new stretch blow molding method for a cylindrical narrow mouth container and a container molded by the method, which has a flat shoulder portion formed with a step-out portion and no seam appearing under the shoulder portion, which is achievable by molding the step-out portion in the injection cavity mold with the body portion. Another object of this invention is to provide a new stretch blow molding method for a cylindrical narrow mouth container and a container molded by the method, of which the shoulder portion is easy to be molded and hard to be broken.

The present invention relates to an injection stretch blow molding method of forming a cylindrical narrow mouth container comprising the following steps; injection molding a preform, having a body portion integrally molded with a neck portion, wherein the body portion thicker-wall and larger outside diameter than the neck portion from a closing surface between a neck mold and an injection cavity mold, and having a step-out portion, wherein an upper surface of the step-out portion is formed by the closing surface of the neck mold between the neck portion and the body portion and the step-out portion has a smaller outside diameter than a body portion of the container; and stretch blow molding the preform to the container in a blow cavity mold, wherein a body portion of the container is formed thin-wall from around the upper surface of the step-out portion, and the step-out portion and an expanded portion around the upper surface of the step-out portion form a flat shoulder portion of the container.

Also, the outside diameter of the step-out portion is smaller than the outside diameter of the open end of a cap.

Moreover, the present invention relates to a cylindrical narrow mouth container molded by the stretch blow molding method mentioned above.

### BRIEF DESCRIPTION OF THE DRAWINGS

FIG. 1 shows (A) a sectional view of a preform and (B) a sectional view of a cylindrical narrow mouth container molded by the injection stretch blow molding according to the present invention and an enlarged detail of a shoulder portion of the container.
FIG. 2 is a partial side view that shows the upper part of the same cylindrical narrow mouth container as above.
FIG. 3 is a sectional view of the preform according to the present invention being injection molded in an injection cavity mold.
FIG. 4 is a sectional view of the same preform as above being stretch blow molded in a blow cavity mold.
FIG. 5 is a sectional view of a conventional preform having a step-out portion (A) and a cylindrical narrow mouth container (B) molded from the preform.
FIG. 6 is a partial side view that shows the upper part of the same cylindrical narrow mouth container as shown on FIG. 5 (B).
FIG. 7 is a sectional view of the conventional preform being injection molded in an injection cavity mold.
FIG. 8 is a sectional view of the same preform as shown on FIG. 7 being stretch blow molded in a blow cavity mold.

### DETAILED DESCRIPTION OF THE INVENTION

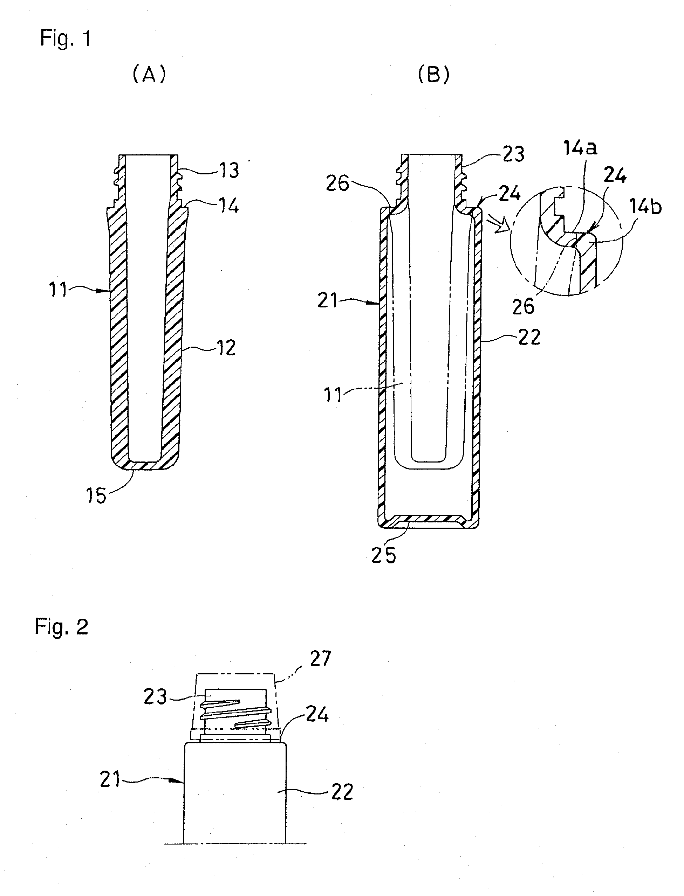

FIG. 1 to FIG. 4 illustrate the embodiments of stretch blow molding method according to the present invention.

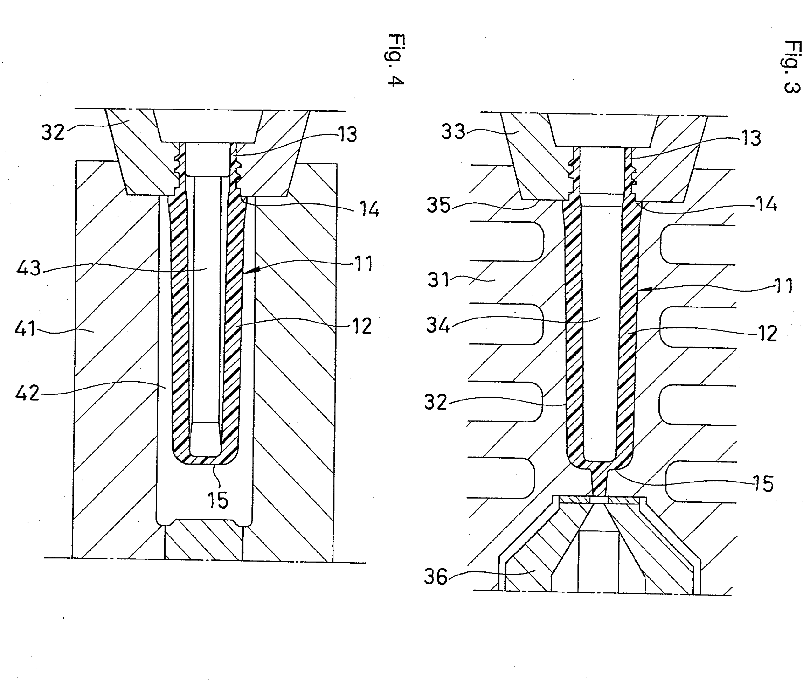

According to the present invention, as illustrated on FIG. 3, an injection cavity mold 31 and a neck mold 33 is closed, an injection core 34 is inserted into a cavity 32 through the neck mold 33, molten resin (for example PET) is injected and filled into the cavity 32 from a nozzle 36 located at the bottom of the cavity 32, the cavity 32 forms a cylindrical body portion 12 and a bottom portion 15 of a preform 11, the neck mold 33 forms a neck portion 13 with the external thread, and the body portion 12 is formed larger in the outside diameter and thicker wall than the neck portion 13 from the closing surface of the neck mold 33 and the injection cavity mold 31

The step-out portion 14, formed between the body portion 12 and the neck portion 13, has an outside diameter slightly larger than the body portion 12 of the preform and smaller than the outside diameter of the body portion 22 of the cylindrical narrow mouth container 21, an upper surface formed flat by the closing surface of the neck mold 33, and a outside surface tapered from the upper surface to the body portion 12.

According to the preform 11 illustrated on FIG. 1, the only part formed by the neck mold 33 on the step-out portion 14 formed between the body portion 12 and the neck portion 13 is the upper surface, and the other surface is formed by the injection cavity mold 31 with the body portion 12. Thus, cooling and solidifying on the step-out portion 14 by the neck mold 33 only occurs upon the upper surface which touches the closing surface directly, and the step-out portion maintains heat as much as the body portion and its softened state.

As illustrated on FIG.4, after transferring the preform 11 with retaining the neck portion 13 by the neck mold 33 and setting into a cavity 42 having a larger diameter than the step-out portion 14 in the blow cavity mold 42 for molding a container, a cavity 42 also appears around the step-out portion 14.

Then, a blow core having a stretch rod 43 is inserted into the neck portion 13 through the neck mold 33. As the preform 11 is stretch blow molded, the step-out portion 14 and the body portion 12 are stretched and expanded in the cavity 42, the resin of the step-out portion 14 is expanded to the closing surface of the neck mold 33, the expanded portion and the step-out portion is formed flat by the closing surface, and a cylindrical narrow mouth container having a flat shoulder 24 is formed as illustrated on FIG.1 (B).

On the cylindrical narrow mouth container 21, the neck portion 13 of the preform becomes a neck portion 23, the step-out portion 14 becomes a flat shoulder portion 24 with the resin which is stretched and expanded, and a body portion 22 is formed thin wall from the shoulder portion 24 to a bottom portion 25. A weld, created under the temperature difference between the upper surface 14a of the step-out portion 14 being cooled and solidified and the expanded portion 14b, does not appear on the periphery surface because the periphery surface of the shoulder portion is formed with the expanded portion 14b, and a seam 26 only appears on an upper surface of the shoulder portion 24 like a ring. Moreover, the seam only appears on the surface and does not get deep, so the shoulder portion withstands the impact caused by dropping.

Also, the seam 26 on the upper surface of the shoulder portion 24 can be hidden under a cap 27 by making the outer diameter of the step-out portion 14 smaller than the outside diameter of the open end of the cap 27. Thus it won't be a defect as a product, and the container can be treated as a fair cylindrical narrow mouth container having a good body portion. Therefore, even a cylindrical narrow mouth container having a flat shoulder formed from the base portion of the neck portion and small radial stretch ratio can be molded easily with using the method that stretch blow molds a injection molded preform right after the injection molding process.

## Claims

1. An injection stretch blow molding method of forming a cylindrical narrow mouth container comprising the following steps;
injection molding a preform having a body portion integrally molded with a neck portion, wherein the body portion is formed thicker-wall and larger outside diameter than the neck portion from a closing surface between a neck mold and an injection cavity mold, and having a step-out portion, wherein an upper surface of the step-out portion is formed by the closing surface of the neck mold between the neck portion and the body portion and the step-out portion has a smaller outside diameter than a body portion of the container; and
stretch blow molding the preform to the container in a blow cavity mold, wherein a body portion of the container is formed thin-wall from around the upper surface of the step-out portion, and the step-out portion and an expanded portion around the upper surface of the step-out portion form a flat shoulder portion of the container.

2. An injection stretch blow molding method according to the claim 1, wherein the outside diameter of the step-out portion is smaller than the outside diameter of the open end of a cap.

3. A cylindrical narrow mouth container made by the method of claim 1 or claim 2.
